# EUROPEAN PATENT SPECIFICATION

(11) **EP 1 344 418 B1**
(45) Date of publication and mention of the grant of the patent: **25.10.2006**
(21) Application number: 01272427.4
(22) Date of filing: 20.12.2001
(51) Int. Cl.: H04Q 7/32, G07F 7/12

(54) **A METHOD OF INCREASING SECURITY IN RESPECT OF PAYMENTS MADE WITH CREDIT CARDS AND CASH CARDS**
VERFAHREN ZUR VERBESSERUNG DER SICHERHEIT IM BEZUG AUF MIT KREDITKARTEN UND CASH-KARTEN DURCHGEFÜHRTE BEZAHLUNGEN
PROCEDE PERMETTANT D'AMELIORER LA SECURITE LORS DE PAIEMENTS EFFECTUES AU MOYEN DE CARTES DE CREDIT ET DE CARTES BANCAIRES

(30) Priority: 22.12.2000 SE 0004820
(43) Date of publication of application: 17.09.2003
(73) Proprietor: Payment Security Sweden Ab, 411 16 Göteborg (SE)
(72) Inventor: FAST, Peder, S-429 34 Kullavik (SE)
(74) Representative: Örtenblad, Bertil Tore
(86) International application number: PCT/SE2001/002864
(87) International publication number: WO 2002/052879

(56) References cited:
- EP-A1- 1 065 634
- WO-A1-96/13814

## Description

The present invention relates to a method of increasing security in respect of payments made with credit cards and cash cards.

The problems ensuing from stolen and forged credit cards and cash cards are becoming more and more serious, and increased efforts are being made to reduce the risks involved in this respect. Many solutions have been proposed, including time limits, limited withdrawals, duplicate encryption and the identification of the card owner with all manner of means ranging from PIN codes to fingerprints, one-time passwords, etc. Regardless of the solutions applied, a fraudulent person is able to pass through the different barriers and obstacles with the aid of evermore sophisticated methods.

The use of mobile telephones or electronic wallets has also been discussed as a means of payment, and an increasing number of payments in greater sums will at times be made in electronic cash. False/cloned telephones and SIM cards already exist, and the use of telephones and SIM cards in respect of payments will increase the aforesaid risks still more.

A real time Tele-payment system whereby a portable telephone can be used in order to pay bills or transfer money from a bank to other, or request the bank for account information is known from WO9613814 A1.

A problem exists with regard to stolen cards, false cards and cloned cards. A common way of fraudulently using a card as a payment means is to produce a copy of a genuine card and to use the false card as a means of payment parallel with the genuine card. Such fraudulent actions are discovered when the true card owner becomes aware that payment or cash withdrawals have been made despite the card owner not being able to remember, or know, that he/she has not made these purchases or cash withdrawals. It is only when this discovery has been made that the card can be blocked. Because of the significant amount of time that can lapse before such fraudulent actions are discovered, significant purchases and withdrawals can be made by the defrauder.

The present invented concept is aimed at reducing said risks, by introducing restrictions in the use of such means of payment without any real restriction with respect to the card owner.

This is achieved by means of the present invention.

Accordingly, the present invention relates to a method of enhancing security in respect of payments effected with a credit card and cash card, and is characterised in that an account number, such as the account number of a credit card or cash card or an account number stored in a SIM card is tied to the identity of a SIM card for a mobile telephone, or to the telephone number of the mobile telephone; in that in conjunction with a payment or a cash withdrawal through the medium of said account via a terminal for such a transaction, the terminal of an existing mobile telephone operator asks to be informed of the present or latest registered geographical position of the mobile telephone; and in that a predetermined agreement between the position of the mobile telephone and the position of said terminal must exist in order for a transaction to be carried out.

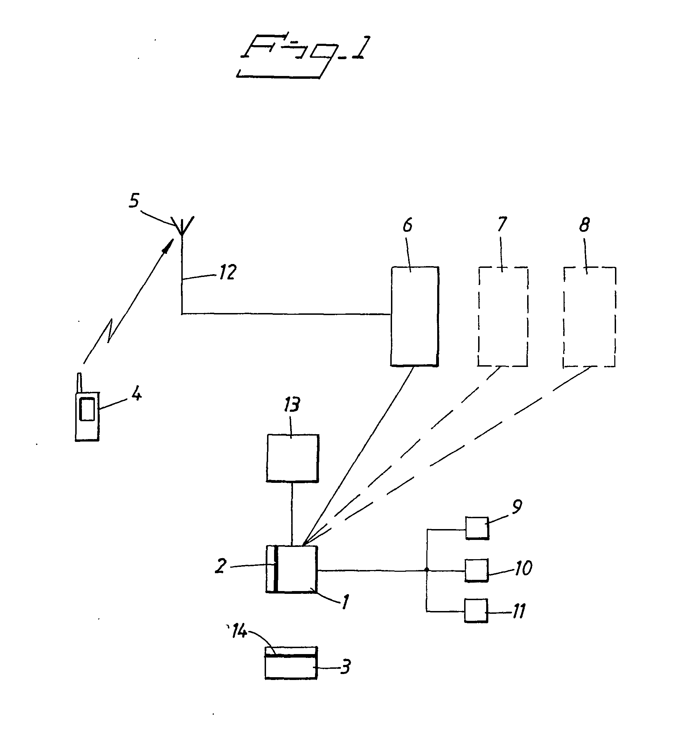

The invention will now be described in more detail partially with reference to an exemplifying embodiment shown in the accompanying drawing, in which Figure 1 is a schematic block diagram.

Figure 1 illustrates a payment or cash-withdrawal terminal 1 which includes a card reader 2 for reading a credit card or cash card 3. Also shown in the figure is a mobile telephone 4 that includes a SIM card. The mobile telephone is connected with a so-called base station 5 belonging to a mobile telephony system. The base station is connected to a computer system 6 associated with a mobile telephone operator. The reference numerals 7 and 8 identify other mobile telephone operators. The terminal 1 is also connected to various cash card companies 9, 10 in a known manner, such as American Express and Eurocard, and also to banks 11 with regard to cash cards.

According to the invention, an account number, such as the account number of a credit card or cash card, or an account number stored in a SIM card, is tied to the identity of a SIM card for a mobile telephone 4, or to the telephone number of the mobile telephone. In conjunction with payment or a cash withdrawal through the medium of said account via a terminal 1 intended for such a transaction, the terminal 1 of respective existing mobile telephone operators 6, 7, 8 asks for the present or latest registered geographic position of the mobile telephone 4 and in accordance with the invention, a predetermined agreement between the position of the mobile telephone 4 and the position of the terminal 1 must exist in order for a transaction to be carried out.

Preferably, the aforesaid tied relationship is stored in respective credit card companies or in a database common to said credit card companies.

The current position or latest position of the mobile telephone is stored by the mobile telephone operators concerned on the basis of information relating to the current or latest base station 12 that the telephone is or was in contact with. A typical area covered by a base station is in the order of one kilometre. Thus, information is found as to the position of the mobile telephone within an area of one kilometre.

The position of the terminal is, of course, known. However, the indication of the position of the terminal must be in accord with indications of base station positions in order to enable a comparison to be made between the position of the mobile telephone and the position of the terminal. The co-ordinate system used in the GSM system may be used in this regard. Naturally, some other appropriate system may be used to determine the respective positions of the mobile telephone and the terminal.

For example, a computer 13 is connected to or integrated with the terminal 1 for comparing the position of the mobile telephone with the position of the terminal. In such an embodiment, the terminal may request for information relating to the position of the mobile telephone from the mobile telephone operator 6, 7, 8 and transfer this information to the computer 13. The position of the terminal is also transmitted to the computer 13, whereafter the comparison takes place. Provided that a predetermined agreement is found between said positions, the computer may function to send such a message to the terminal 1, which therewith carries out the transaction.

According to one preferred embodiment, it is considered that such agreement will exist when there is a predetermined relationship between the time that has elapsed during movement between the two positions and the distance between said positions. For example, longer periods of time can be permitted for short movements in large cities and towns, as will often be the case in shopping districts. Movements covering long distances over short periods of time can also be accepted in the countryside. The person skilled in this art can choose between suitable criteria for achieving a desired security level.

In case said agreement does not exist this is indicated by the terminal. The absence of any agreement is indicated by the terminal. No transaction can therefore be carried out.

Instead of making a comparison in a special computer 13, the comparison can be made by respective credit card companies 9, 10, 11. In this case, respective credit card companies take information from respective telephone operators 6, 7, 8, either directly or via the terminal 1. The computers of respective credit card companies then compare the current telephone position with the position of the terminal. The position of the terminal is herewith fed into the computer system of the cash card company concerned. The cash card company then sends to the terminal a signal to the effect that the telephone position and the terminal position match one another.

Correspondingly, the two positions may be checked instead by the mobile telephone operator.

Information relating to the tied relationship of an account number, such as the account number of a credit card or cash card or an account number stored in a SIM card with the identity of a SIM card for a mobile telephone 4 can be caused to exist in different ways.

One way is to store the telephone number concerned on the magnetic tape 14 of a credit card, so that said number can be read-off by the terminal 1. Information relating to the operator 6, 7, 8 concerned can also be stored on the magnetic tape. Another way is for respective cash card companies or banks to tie telephone number information to different accounts. The terminal 1 can obtain this information when the terminal is connected to respective cash card companies or banks.

In the case when an account number is stored on the SIM card of the mobile telephone, the account number can be transmitted to the terminal 1 by connecting the telephone to the terminal, either directly or via a mobile telephone operator. Several account numbers may, of course, be stored on the SIM card, where an account number can be selected through the medium of the telephone keypad.

According to a highly preferred embodiment, it is necessary for the mobile telephone to be switched-on, so that the current position of the telephone can be established before said transaction is possible.

According to another preferred embodiment, agreement between the geographical position of the terminal last used and the present terminal is determined with respect to a reasonable shortest period of time for movement of the telephone from the latest position to the present position. This embodiment relates primarily to pairing the telephone and the account number together at an earlier transaction and then pairing together the telephone and the account number at a later transaction. This later transaction can be carried out when sufficient time has passed between the two transactions in relation to the distance between the two terminals concerned. The transaction cannot be carried out, when this time period is too short. Instead, some form of alarm is triggered which indicates that a fraudulent action is about to take place. Said comparison can be made by the telephone operator 6, 7, 8 with which criteria relating to said movement times have been entered.

Although the invention has been described above with reference to a number of exemplifying embodiments thereof, it will be obvious to the person skilled in this art that the requisite flows of information can be varied.

Moreover, a given account can be tied to two or more telephone numbers, and vice versa.

The present invention shall not therefore be considered limited to the aforedescribed embodiments, since variations can be made within the scope of the accompanying Claims.

## Claims

1. A method of increasing security in respect of payment made with a credit card and cash card, **characterised in that** an account number, such as the account number of a credit card or cash card or an account number stored on a SIM card is tied to the identity of a SIM card for a mobile telephone or to the telephone number of said mobile telephone; that the terminal of an existing mobile telephone operator is caused to request for the current or last registered geographical position of the mobile telephone in conjunction with a payment or a cash withdrawal through the medium of said account, via a terminal for such a transaction; and **in that** it is necessary for a predetermined agreement to exist between the position of the mobile telephone and the position of said terminal in order for a transaction to be carried out.

2. A method according to Claim 1, **characterised in that** it is necessary for the mobile telephone to be switched-on, so that the current position of the mobile telephone can be established before the transaction is possible.

3. A method according to Claim 1 or 2, **characterised in that** an agreement between the geographical position of the last used terminal and the current terminal concerned is determined by a reasonable shortest period of time for the telephone to be moved from the last position to the current position.

4. A method according to Claim 1, 2 or 3, **characterised in that** any lack of agreement is indicated by said terminal.

5. A method according to Claim 1, 2, 3 or 4, **characterised in that** said agreement is considered to exist when a predetermined relationship exists between the time that has elapsed during movement of the telephone between the two positions and the distance between said positions.

## Patentansprüche

1. Ein Verfahren zur Erhöhung von der Sicherheit in Bezug auf Zahlungen über eine Kreditkarte oder eine Geldkarte
**dadurch gekennzeichnet, dass**
eine Kundennummer, wie beispielsweise die Kontonummer einer Kreditkarte oder einer Geldkarte oder einer Kundennummer, welche auf einer SIM-Karte gespeichert ist, verknüpft wird mit der Identität einer SIM-Karte eines Mobiltelefons oder mit der Telefonnummer des genannten Mobiltelefons;
dass das Terminal eines bestehenden Mobilfunkanbieters veranlasst wird, über ein Terminal einer solchen Transaktion, die gegenwärtige oder letzte registrierte geographische, mit einer Zahlung oder einer Bargeldabhebung in Verbindung stehende Position des Mobiltelefons über diesen Account abzufragen; und dass es notwendig ist, dass eine vorbestimmte Übereinstimmung zwischen der Position des Mobiltelefons und der Position des genannten Terminals besteht, damit die Transaktion ausgeführt wird.

2. Ein Verfahren gemäß Anspruch 1, **dadurch gekennzeichnet, dass** es notwendig ist, dass das Telefon eingeschaltet ist, so dass die gegenwärtige Position des Mobiltelefons festgestellt werden kann, bevor die Transaktion möglich ist.

3. Ein Verfahren gemäß Ansprüchen 1 oder 2, **dadurch gekennzeichnet, dass** eine Übereinstimmung zwischen der geographischen Position des zuletzt benutzten Terminals und dem gegenwärtig verwendeten Terminals durch die vernünftigerweise kürzeste Zeitdauer bestimmt wird, in der das Telefon von der letzten zur gegenwärtigen Position bewegt werden kann.

4. Ein Verfahren gemäß einem der Ansprüche 1, 2 oder 3, **dadurch gekennzeichnet, dass** jeder Mangel an Übereinstimmung durch das Terminal angezeigt wird.

5. Ein Verfahren gemäß einem der Ansprüche 1, 2, 3 oder 4, **dadurch gekennzeichnet, dass** die genannte Übereinstimmung als bestehend angenommen wird, wenn eine vorbestimmte Beziehung zwischen der Zeit, welche durch die Bewegung des Telefons zwischen den zwei Positionen und der Entfernung dieser Positionen erfüllt ist.

## Revendications

1. Procédé permettant d'accroître la sécurité d'un paiement effectué au moyen d'une carte de crédit et d'une carte de retrait,
**caractérisé en ce qu'**
un numéro de compte, tel que le numéro de compte d'une carte de crédit ou d'une carte de retrait ou un numéro de compte stocké sur une carte SIM lié à l'identité d'une carte SIM pour un téléphone mobile ou au numéro de téléphone du téléphone mobile ;
le terminal d'un opérateur de téléphonie mobile existant est amené à demander la position géographique actuelle ou la dernière position géographique enregistrée du téléphone mobile en liaison avec un paiement ou un retrait d'argent liquide au moyen du compte, via un terminal destiné à une telle transaction ; et
un accord prédéterminé entre la position du téléphone mobile et la position du terminal est nécessaire afin qu'une transaction soit réalisée.

2. Procédé selon la revendication 1,
**caractérisé en ce qu'**
le téléphone mobile doit être allumé, de manière à ce que sa position actuelle puisse être établie avant que la transaction soit possible.

3. Procédé selon la revendication 1 ou 2,
**caractérisé en ce qu'**
un accord entre la position géographique du dernier terminal utilisé et du terminal actuel concerné est déterminé par un laps de temps raisonnable le plus court possible au cours duquel le téléphone est déplacé depuis la dernière position jusqu'à la position actuelle.

4. Procédé selon la revendication 1, 2 ou 3,
**caractérisé en ce que**
toute absence d'accord est indiquée par le terminal.

5. Procédé selon la revendication 1, 2, 3 ou 4,
**caractérisé en ce que**
l'accord est considéré comme existant lorsqu'il y a une relation prédéterminée entre le temps écoulé pendant le déplacement du téléphone entre les deux positions et la distance entre ces positions.
